# EUROPEAN PATENT APPLICATION

(11) **EP 3 703 084 A1**
(43) Date of publication of application: **02.09.2020**
(21) Application number: 18870309.4
(22) Date of filing: 26.10.2018
(51) Int. Cl.: H01B 7/00, C01B 32/158, H01B 1/04, H01B 7/42

(54) **CARBON NANOTUBE COATED ELECTRIC WIRE AND COIL**

(30) Priority: 26.10.2017 JP 2017207664
(71) Applicant: Furukawa Electric Co., Ltd., Chiyoda-ku Tokyo 100-8322 (JP)
(72) Inventor: AIZAWA, Hideki, Tokyo 100-8322 (JP); WATANABE, Michimasa, Tokyo 100-8322 (JP); YAMAZAKI, Satoshi, Tokyo 100-8322 (JP); YAMASHITA, Satoshi, Tokyo 100-8322 (JP); HATAMOTO, Kenji, Tokyo 100-8322 (JP)
(74) Representative: Gunzelmann, Rainer
(86) International application number: PCT/JP2018/039978
(87) International publication number: WO 2019/083036

(57) **Abstract**

The present invention relates to a coated carbon nanotube electric wire and a coil, which have excellent electroconductivity that is comparable to a wire made of copper, aluminum, or the like, realize an excellent insulation property and abrasion resistance, further have a heat dissipation ability, and can realize weight reduction. A coated carbon nanotube electric wire (1) includes: a carbon nanotube wire (10) that includes a single or a plurality of carbon nanotube aggregates (11) configured of a plurality of carbon nanotubes (11a); and an insulating coating layer (21) coating the carbon nanotube wire, and a thickness deviation rate of the insulating coating layer (21) is equal to or greater than 50%.

## Description

### Technical Field

The present invention relates to a coated carbon nanotube electric wire and a coil, in which a carbon nanotube wire configured of a plurality of carbon nanotubes is coated with an insulating material.

### Background Art

A carbon nanotube (hereinafter, also referred to as a "CNT") is a material that has various properties and has been expected to be applied to a large number of fields.

For example, the CNT is a three-dimensional mesh structure element configured of a single layer of a tubular element that has a mesh structure of hexagonal lattices or of multiple layers substantially coaxially disposed, has a light weight, and has various excellent properties such as electroconductivity, heat conductivity, and mechanical strength. However, it is not easy to form the CNT as a wire, and no technologies using the CNT as a wire have not been proposed.

As one of a small number of examples of technologies using CNT wires, using CNTs instead of metal that is a material burying a via hole formed in a multilayer wiring structure has been examined. Specifically, a wiring structure using, as an interlayer wiring for two or more conductive layers, a multilayer CNT that are stretched coaxially from a growth start point of the multilayer CNT to an end on a further side and that have a plurality of cut surfaces each brought into contact with the conductive layers in order to reduce a resistance of the multilayer wiring structure has been proposed (Patent Literature 1).

As another example, a CNT material in which an electroconductive deposition made of metal or the like is formed at an electrical junction of adjacent CNT wires in order to further improve electroconductivity of the CNT material has been proposed. There is a disclosure that it is possible to apply such a CNT material to a wide range of applications (Patent Literature 2). Also, a heater that has a heat conductive member made of a matrix of CNTs using excellent heat conductivity that CNT wires exhibit has been proposed (Patent Literature 3).

On the other hand, electric wires, each of which includes a core wire configured of one or a plurality of wires and an insulating coating that coats the core wire, have been used as electric wires and signal wires in a variety of fields of vehicles, industrial devices, and the like. Copper or copper alloys are typically used as materials for the wires configuring core wires in terms of electrical characteristics, and aluminum or aluminum alloys have been proposed in recent years in terms of weight reduction. For example, a specific weight of aluminum is about 1/3 of a specific weight of copper, and electric conductivity of aluminum is about 2/3 of electric conductivity of copper (in a case in which the electric conductivity of pure copper is defined as a reference of 100%IACS, the electric conductivity of pure aluminum is about 66%IACS). In order to cause the same amount of current as that flowing through a copper wire to flow through an aluminum wire, it is necessary to increase the sectional area of the aluminum wire to about 1.5 times the sectional area of the copper wire. However, even if such an aluminum wire with an increased sectional area is used, the mass of the aluminum wire is about a half of the mass of the copper wire. Therefore, it is advantageous to use the aluminum wire in terms of weight reduction.

Also, further enhancement of performances and functions of vehicles, industrial devices, and the like has been carried out, and with this trend, the number of various electric devices and control devices disposed increases, and there is a trend that the number of wires of electric wire elements used in these devices and heat generated by core wires increase. Thus, there has been a requirement for improving heat dissipation ability of electric wires without degrading insulation properties due to insulating coating. On the other hand, there has also been a requirement for reducing weights of wires in order to improve power consumption of mobile bodies such as vehicles for environmental compatibility.

Also, coated electric wire are typically manufactured by extruding insulating coating layers and coating peripheral surfaces of conductive elements with the insulating coating layers using extrusion molding machines or the like. The insulating coating layers coating the conductive elements are formed to have desired thicknesses using shapes of dies used in the extrusion process. A CNT wire has a high Young's modulus, and a stress of twisting back is likely to occur in a case in which the CNT wire is used as a twisted wire. Therefore, variations are likely to occur when insulating coating processing is performed on the CNT wire, in particular, when the CNT wire is caused to pass through a die. Although it is only necessary to perform the insulating coating processing with an application of a sufficient tensile force to the CNT wire in order to curb the variations, it is not possible to apply a strong tensile force to the CNT wire with low tensile strength. If variations occur in the insulating coating processing, there is a problem that the deviation occurs in thicknesses of insulating coating layers, in other words, thickness deviation rates of the insulating coating layers decrease. Since insulation breakage is likely to occur at locations where thicknesses of the insulating coating layers are thin, it has been desired to develop a coated CNT electric wire with an excellent insulation property.

### Document List

### Patent Literatures

Patent Literature 1: Japanese Patent Application Publication No. 2006-120730
Patent Literature 2: National Publication of International Patent Application No. 2015-523944
Patent Literature 3: Japanese Patent Application Publication No. 2015-181102

### Summary of Invention

### Technical Problem

It is an object of the present invention to provide a coated carbon nanotube electric wire and a coil, which have excellent electroconductivity that is comparable to a wire made of copper, aluminum, or the like, realize excellent insulation property and abrasion resistance, further have an excellent heat dissipation ability, and can realize light weight.

### Solution to Problem

In order to achieve the aforementioned object, a coated carbon nanotube electric wire according to the present invention includes: a carbon nanotube wire including a single or a plurality of carbon nanotube aggregates configured of a plurality of carbon nanotubes; and an insulating coating layer coating the carbon nanotube wire, and a thickness deviation rate of the insulating coating layer is equal to or greater than 50%.

Also, the thickness deviation rate of the insulating coating layer is preferably equal to or greater than 80%.

A number of twists of the carbon nanotube wire is preferably equal to or greater than 40 T/m and equal to or less than 1500 T/m.

The number of twists of the carbon nanotube wire is preferably equal to or greater than 200 T/m and equal to or less than 1000 T/m.

The carbon nanotube wire preferably includes a plurality of the carbon nanotube aggregates, and a full-width at half maximum Δθ in azimuth angle in azimuth plot based on small-angle X-ray scattering indicating an orientation of the plurality of carbon nanotube aggregates is preferably equal to or less than 80°, and a thickness deviation rate of the insulating coating layer is preferably equal to or greater than 80%.

The full-width at half maximum Δθ in azimuth angle is preferably equal to or less than 60°.

A proportion of a sectional area of the insulating coating layer in a radial direction with respect to a sectional area of the carbon nanotube wire in the radial direction is preferably equal to or greater than 0.01 and equal to or less than 1.5.

The sectional area of the carbon nanotube wire in the radial direction is preferably equal to or greater than 0.0005 mm² and equal to or less than 80 mm².

A proportion of a Young's modulus of a material configuring the insulating coating layer with respect to a Young's modulus of the carbon nanotube wire is preferably equal to or greater than 0.00001 and equal to or less than 0.5.

The proportion of the Young's modulus of the material configuring the insulating coating layer with respect to the Young's modulus of the carbon nanotube wire is preferably equal to or greater than 0.0005 and equal to or less than 0.1.

The carbon nanotube wire preferably includes a plurality of the carbon nanotube aggregates, and a full-width at half maximum Δθ in azimuth angle in azimuth plot based on small-angle X-ray scattering indicating an orientation of the plurality of carbon nanotube aggregates is preferably equal to or greater than 40°.

A q value of a peak top at a (10) peak of scattering intensity based on X-ray scattering indicating density of the plurality of carbon nanotubes is preferably equal to or greater than 2.0 nm⁻¹ and equal to or less than 5.0 nm⁻¹, and a full-width at half maximum Δq is preferably equal to or greater than 0.1 nm⁻¹ and equal to or less than 2.0 nm⁻¹.

A coil according to the present invention is preferably formed by winding the coated carbon nanotube electric wire.

### Effects of Invention

A carbon nanotube wire using carbon nanotubes as a core wire has anisotropic heat conduction, and heat is transmitted with priority in a longitudinal direction than in a radial direction, unlike a core wire made of metal. In other words, since the carbon nanotube wire has anisotropic heat dissipation ability, the carbon nanotube wire has more excellent heat dissipation ability as compared with the core wire made of metal. Therefore, it is necessary to employ design of an insulating coating layer coating the core wire using the carbon nanotubes, which is different from design of an insulating coating layer for the core wire made of metal. According to the present invention, since the thickness deviation rate of the insulating coating layer is equal to or greater than 50%, it is possible to curb occurrence of insulation breakage and to realize an excellent insulation property even in a configuration of a twisted wire or the like in which the thickness of the carbon nanotube wire is likely to deviate. Also, it is possible to realize excellent abrasion resistance of the coated carbon nanotube electric wire and further to realize weight reduction as compared with an electric wire coated with metal such as copper or aluminum.

Also, by the thickness deviation rate of the insulating coating layer being equal to or greater than 80%, more uniform insulating coating layer is formed, the coated carbon nanotube electric wire is unlikely to be bent in the longitudinal direction, and it is possible to easily arrange the coated carbon nanotube electric wire when an electric wire path is formed in equipment or a device and thereby to achieve both excellent insulation property and excellent handling ability.

Also, by the number of twists of the carbon nanotube wire being equal to or greater than 40 T/m and equal to or less than 1500 T/m, tensile strength of the carbon nanotube wire increases, and it is possible to perform insulating coating processing in a state in which sufficient tensile force is applied to the CNT wires. As a result, the thickness deviation rate of the insulating coating layer increases. It is possible to curb occurrence of insulation breakage and to realize an excellent insulation property.

Further, by the carbon nanotube wire including the plurality of carbon nanotube aggregates and the full-width at half maximum Δθ in azimuth angle in azimuth plot based on small-angle X-ray scattering indicating an orientation of the plurality of carbon nanotube aggregates being equal to or less than 80°, and the thickness deviation rate of the insulating coating layer being equal to or greater than 80%, it is possible to achieve both excellent heat dissipation ability and an insulation property.

Also, by the proportion of the sectional area of the insulating coating layer in the radial direction with respect to the sectional area of the carbon nanotube wire in the radial direction being equal to or greater than 0.01 and equal to or less than 1.5, it is possible to realize excellent abrasion resistance without degrading an insulating property and also to realize further weight reduction even in a case in which an insulating coating layer with a thin thickness that is likely to deviate is formed.

Also, by the proportion of the Young's modulus of the material configuring the insulating coating layer with respect to the Young's modulus of the carbon nanotube wire being equal to or greater than 0.00001 and equal to or less than 0.5, it is possible to reliably prevent occurrence of peeling of the insulating coating layer from the carbon nanotube wire and cracking in the insulating coating layer even if the coated carbon nanotube electric wire is repeatedly bent.

Further, by the full-width at half maximum Δθ in azimuth angle in azimuth plot based on small-angle X-ray scattering of the carbon nanotube aggregates in the carbon nanotube wire being equal to or greater than 40°, the carbon nanotube aggregates have a high orientation in the carbon nanotube wire, and heat dissipation ability of the carbon nanotube wire is thus further improved.

Further, by the q value of the peak top at the (10) peak of scattering intensity based on X-ray scattering of aligned carbon nanotubes being equal to or greater than 2.0 nm⁻¹ and equal to or less than 5.0 nm⁻¹, and the full-width at half maximum Δq being equal to or greater than 0.1 nm⁻¹ and equal to or less than 2.0 nm⁻¹, heat dissipation ability of the carbon nanotube wire is further improved since the carbon nanotubes can be present with high density.

### Brief Description of Drawings

[FIG. 1] An explanatory diagram of a coated carbon nanotube electric wire according to an embodiment of the present invention.
[FIG. 2] An explanatory diagram of a carbon nanotube wire used in the coated carbon nanotube electric wire according to the embodiment of the present invention.
[FIG. 3] FIG. 3A is a diagram illustrating an example of a two-dimensional scattering image of scattering vectors q of a plurality of carbon nanotube aggregates obtained through SAXS, and FIG. 3B is a graph illustrating an example of azimuth angle-scattering intensity of an arbitrary scattering vector q that has an origin at a position of a transmitted X ray in the two-dimensional scattering image.
[FIG. 4] A graph illustrating a relationship of a q value-intensity obtained through WAXS of a plurality of carbon nanotubes that configure the carbon nanotube aggregates.

### Description of Embodiments

Hereinafter, a coated carbon nanotube electric wire according to an embodiment of the present invention will be described with reference to drawings.

### [Configuration of coated carbon nanotube electric wire]

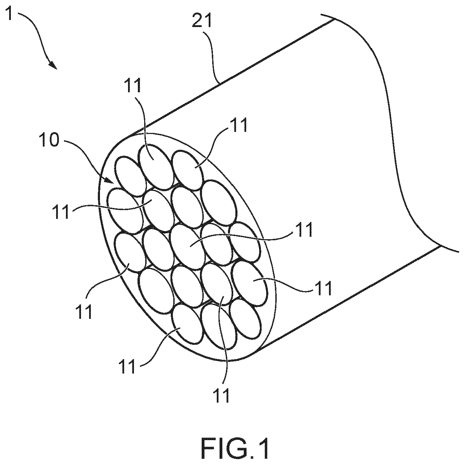

As illustrated in FIG. 1, a coated carbon nanotube electric wire according to an embodiment of the present invention (hereinafter, also referred to as a "coated CNT electric wire") 1 has a configuration in which a peripheral surface of a carbon nanotube wire (hereinafter, also referred to as a "CNT wire") 10 is coated with an insulating coating layer 21. In other words, the CNT wire 10 is coated with the insulating coating layer 21 along the longitudinal direction. In the coated CNT electric wire 1, the entire peripheral surface of the CNT wire 10 is coated with the insulating coating layer 21. Also, the insulating coating layer 21 is in the form in which the insulating coating layer 21 directly contacts with the peripheral surface of the CNT wire 10 in the coated CNT electric wire 1. Although the CNT wire 10 is an element wire (solid wire) made of one CNT wire 10 in FIG. 1, the CNT wire 10 may be in a state of twisted wire in which a plurality of CNT wires 10 are twisted. It is possible to appropriately adjust an equivalent circle diameter and a sectional area of the CNT wire 10 by employing a form of the twisted wire for the CNT wire 10.

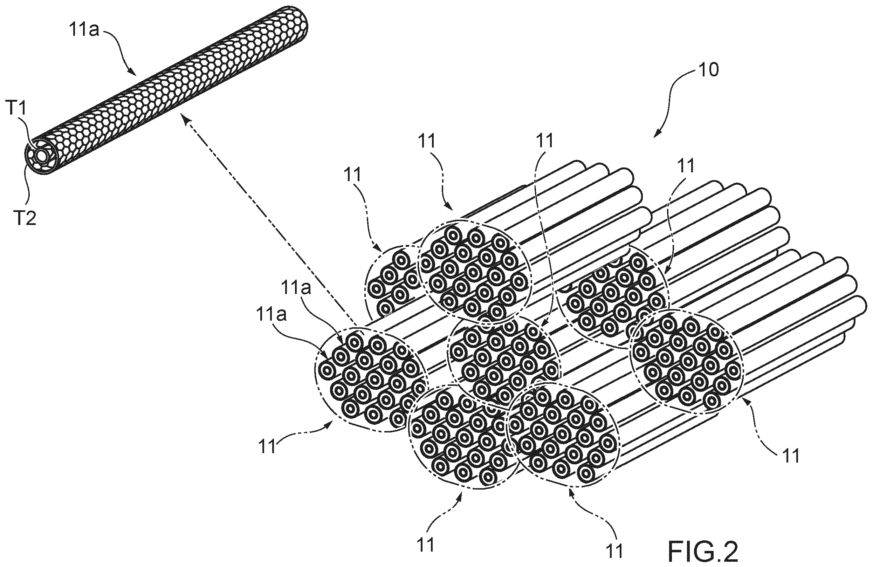

As illustrated in FIG. 2, the CNT wire 10 is formed of a single carbon nanotube aggregate (hereinafter, also referred to as a "CNT aggregate") 11 or a plurality of bundled carbon nanotube aggregates 11 configured of a plurality of CNTs 11a, 11a, ... that have a layer structure of one or more layers. Here, the CNT wires mean CNT wires in which a proportion of CNTs is equal to or greater than 90% by mass. Note that masses of plating and dopant are excluded from calculation of the CNT proportion in the CNT wires. In FIG. 2, the CNT wire 10 has a configuration in which a plurality of CNT aggregates 11 are bundled. The longitudinal direction of the CNT aggregates 11 forms the longitudinal direction of the CNT wire 10. Thus, the CNT aggregates 11 have a linear shape. The plurality of CNT aggregates 11, 11, ... in the CNT wire 10 are disposed such that the long axis directions thereof are substantially aligned. Therefore, the plurality of CNT aggregates 11, 11, ... in the CNT wire 10 are oriented. Although the equivalent circle diameter of the CNT wire 10 that is a strand is not particularly limited, the equivalent circle diameter is equal to or greater than 0.01 mm and equal to or less than 4 mm, for example. Also, the equivalent circle diameter of the CNT wire 10 that is a twisted wire is not particularly limited, the equivalent circle diameter is equal to or greater than 0.1 mm and equal to or less than 15 mm, for example.

The Young's modulus of the CNT wire 10 is 300 to 1500 GPa, for example. Also, the Young's modulus of the CNT wire 10 is 600 to 1500 GPa, for example, in a case in which the CNT wire 10 is an element wire (solid wire) while the Young's modulus of the CNT wire 10 is 300 to 1200 GPa, for example, in a case in which the CNT wire 10 is a twisted wire.

The CNT aggregates 11 are bundles of CNTs 11a that have a layer structure of one or more layers. The longitudinal direction of the CNTs 11a forms a longitudinal direction of the CNT aggregates 11. The plurality of CNTs 11a, 11a, ... in the CNT aggregates 11 are disposed such that the long axis directions thereof are substantially aligned. Therefore, the plurality of CNTs 11a, 11a, ... in the CNT aggregates 11 are oriented. The equivalent circle diameter of the CNT aggregates 11 is equal to or greater than 20 nm and equal to or less than 1000 nm, for example, and is more typically equal to or greater than 20 nm and equal to or less than 80 nm. The width dimension of the outermost layer of the CNTs 11a is equal to or greater than 1.0 nm and equal to or less than 5.0 nm, for example.

Each of the CNTs 11a configuring the CNT aggregates 11 is a tubular element that has a single-layer structure or a multiple-layer structure and is referred to as a single-walled nanotube (SWNT) or a multi-walled nanotube (MWNT). Although only the CNTs 11a that have a two-layer structure are illustrated in FIG. 2 for convenience, the CNT aggregates 11 may include CNTs that have a layer structure of a three or more layers or CNTs that have a layer structure of a single layer, or the CNT aggregates 11 may be formed of the CNTs that have a layer structure of three or more layers or the CNTs that have a layer structure of a single layer.

Each CNT 11a that has a two-layer structure has a three-dimensional mesh structure element in which two tubular elements T1 and T2 that have a mesh structure of hexagonal lattices are substantially coaxially disposed and is called a double-walled nanotube (DWNT). Each hexagonal lattice that is a configuration unit is a six-membered ring with carbon atoms disposed at apexes thereof and is adjacent to other six-membered rings, and these are successively coupled to each other.

Characteristics of the CNTs 11a depend on chirality of the aforementioned tubular elements. Chirality is roughly classified into an armchair type, a zigzag type, and a chiral type, the armchair type exhibits metallic behaviors, the zigzag type exhibits semiconducting and semi-metallic behaviors, and the chiral type exhibits semiconducting and semi-metallic behaviors. Thus, the electroconductivity of the CNTs 11a significantly differs depending on which of chirality the tubular elements have. In order to further improve electroconductivity, it is preferable to increase the proportion of the armchair-type CNTs 11a that exhibit metallic behaviors in the CNT aggregates 11 that configure the CNT wire 10 of the coated CNT electric wire 1.

On the other hand, it is known that the chiral-type CNTs 11a exhibit metallic behaviors by doping the chiral-type CNTs 11a that exhibit semiconducting behaviors with a substance (a different kind of element) with electron donating properties or electron receiving properties. Also, electroconductivity decreases due to occurrence of scattering of conductive electrons inside typical metal by doping the metal with a different kind of element. Similarly, doping the CNTs 11a that exhibit metallic behaviors with a different kind of element leads to a decrease in electroconductivity.

In this manner, an effect of doping of the CNTs 11a that exhibit metallic behaviors and the CNTs 11a that exhibit semiconducting behaviors has a trade-off relationship in terms of electroconductivity. Thus, it is theoretically desirable to separately produce the CNTs 11a that exhibit metallic behaviors and the CNTs 11a that exhibit semiconducting behaviors, perform doping processing only on the CNTs 11a that exhibit semiconducting behaviors, and then combine these. However, it is difficult to selectively produce the CNTs 11a that exhibit metallic behaviors and the CNTs 11a that exhibit semiconducting behaviors in a distinguished manner by current manufacturing technologies, and the CNTs 11a that exhibit metallic behaviors and the CNTs 11a that exhibit semiconducting behaviors are produced in a mixed state. Thus, in order to further improve electroconductivity of the CNT wire 10 including a mixture of the CNTs 11a that exhibit metallic behaviors and the CNTs 11a that exhibit semiconducting behaviors, it is preferable to select such a layer structure for the CNTs 11a that makes the doping processing using a different kind of element/molecule effective.

For example, a CNT with a small number of layers, such as a two-layer structure or a three-layer structure, has relatively higher electroconductivity than that of a CNT with a larger number of layers, and the highest doping effect can be achieved in the CNT with the two-layer structure or the three-layer structure when doping processing is performed. Therefore, it is preferable to increase the proportion of CNTs with a two-layer structure or a three-layer structure in order to further improve electroconductivity of the CNT wire 10. Specifically, the proportion of the CNTs with a two-layer structure or a three-layer structure with respect to all the CNTs is preferably equal to or greater than 50% by number and is more preferably equal to or greater than 75% by number. The proportion of CNTs with a two-layer structure or a three-layer structure can be calculated by observing and analyzing the section of the CNT aggregates 11 using a transmission electron microscope (TEM), selecting a predetermined number of arbitrary CNTs such that the number falls within a range of 50 to 200, and measuring the number of layers in each of the CNTs.

Next, orientations of the CNTs 11a and the CNT aggregates 11 in the CNT wire 10 will be described.

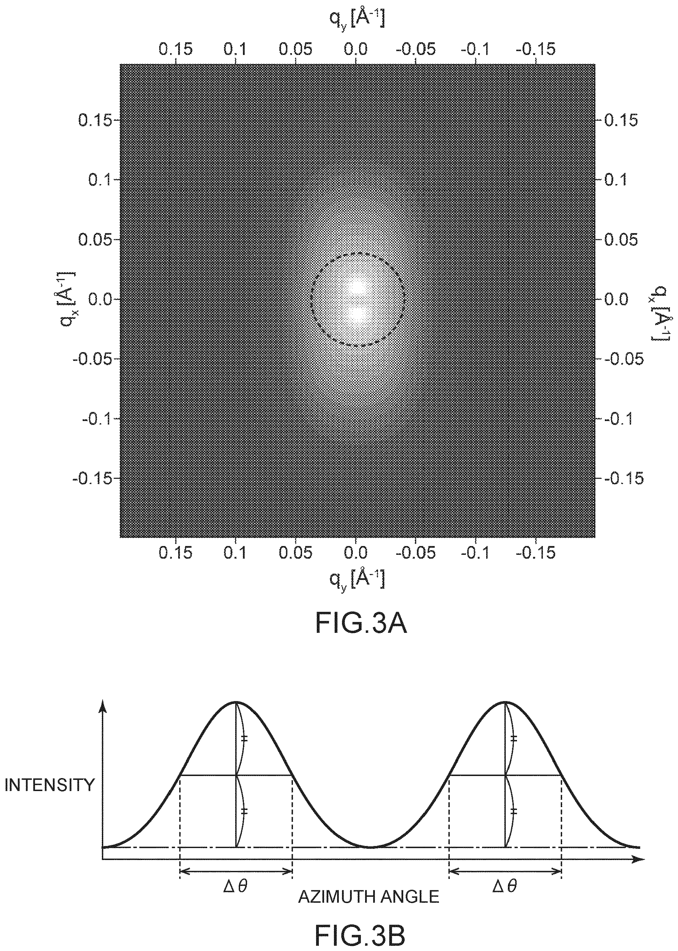

FIG. 3A is a diagram illustrating an example of a two-dimensional scattering image of scattering vectors q of the plurality of CNT aggregates 11, 11, ... based on small-angle X-ray scattering (SAXS), and FIG. 3B is a graph illustrating an example of azimuth plot illustrating a relationship of azimuth angle-scattering intensity of an arbitrary scattering vector q using a position of a transmitted X ray as an origin in a two-dimensional scattering image.

The SAXS is suitable for evaluating a structure and the like of a size of several nm to several tens of nm. For example, it is possible to evaluate orientations of the CNTs 11a with outer diameters of several nm and the CNT aggregates 11 with outer diameters of several tens of nm by analyzing information of an X-ray scattering image by the following method using the SAXS. If an X-ray scattering image of the CNT wire 10 is analyzed, for example, qy that is a y component is more narrowly distributed than qx that is an x component of the scattering vector q (q = 2π/d: d is a lattice spacing) of the CNT aggregates 11 as illustrated in FIG. 3A. Also, as a result of analyzing the azimuth plot of SAXS for the same CNT wire 10 as that in FIG. 3A, the full-width at half maximum Δθ in azimuth angle in azimuth plot illustrated in FIG. 3B is 48°. It is possible to state, on the basis of these analysis results, that the plurality of CNTs 11a, 11a, ... and the plurality of CNT aggregates 11, 11, ... have satisfactory orientations in the CNT wire 10. In this manner, since the plurality of CNTs 11a, 11a, ... and the plurality of CNT aggregates 11, 11, ... have satisfactory orientations, the heat of the CNT wire 10 is more likely to be discharged while smoothly delivered along the longitudinal direction of the CNTs 11a and the CNT aggregates 11. Thus, since it is possible to adjust a heat dissipation route in the longitudinal direction and in the radial sectional direction by adjusting the aforementioned orientations of the CNTs 11a and the CNT aggregates 11, the CNT wire 10 exhibits more excellent heat dissipation ability as compared with the core wire made of metal. Note that the orientations indicate angular differences of vectors of the CNTs and the CNT aggregates inside with respect to a vector V of the twisted wire produced by twisting the CNTs together in the longitudinal direction.

If the full-width at half maximum Δθ in azimuth angle is equal to or less than 80°, it is considered that the plurality of CNTs 11a, 11a, ... and the plurality of CNT aggregates 11, 11, ... have orientations to some extent in the CNT wire 10. Although an upper limit value of the full-width at half maximum Δθ in azimuth angle is not particularly limited, the upper limit value is preferably 80°, is more preferably 60°, and is further preferably 50° in order to enhance orientations of the CNTs 11a and the CNT aggregates 11 and to further improve heat dissipation ability of the CNT wire 10. Also, although a lower limit value of the full-width at half maximum Δθ in azimuth angle is not particularly limited, the lower limit value is preferably 40° in order to improve heat dissipation ability.

Next, an alignment structure and density of the plurality of CNTs 11a configuring the CNT aggregates 11 will be described.

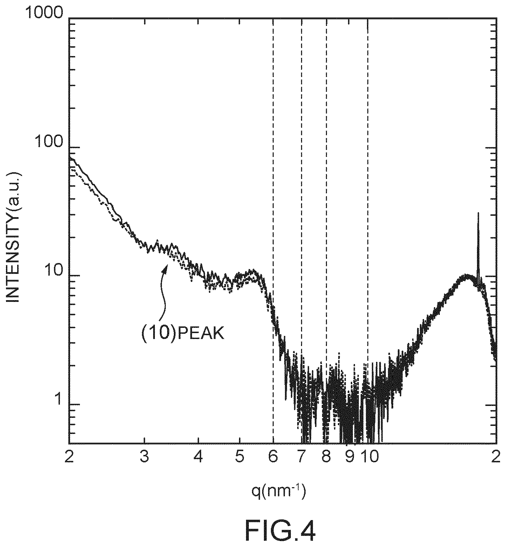

FIG. 4 is a graph illustrating a relationship of a q value-intensity in wide-angle X-ray scattering (WAXS) of the plurality of CNTs 11a, 11a, ... configuring the CNT aggregates 11.

The WAXS is suitable for evaluating a structure and the like of a material with a size of equal to or less than several nm. For example, it is possible to evaluate density of the CNTs 11a with outer diameters of equal to or less than several nm by analyzing information of an X-ray scattering image by the following method using the WAXS. As a result of analyzing a relationship between a scattering vector q and intensity for an arbitrary one CNT aggregate 11, a value of a lattice constant estimated from the q value of the peak top at the (10) peak observed near q = 3.0 nm⁻¹ to 4.0 nm⁻¹ is measured as illustrated in FIG. 4. It is possible to confirm that the CNTs 11a, 11a, ... form hexagonal closest-packing structure in a plan view, on the basis of the measurement value of the lattice constant and the diameter of the CNT aggregate observed by Raman spectroscopy, a TEM, or the like. Therefore, it is possible to state that diameter distribution of the plurality of CNT aggregates in the CNT wire is narrow, and the plurality of CNTs 11a, 11a, ... are aligned with regularity, that is, with high density, thus form a hexagonal closest-packing structure, and are present with high density.

Since the plurality of CNT aggregates 11, 11, ... have satisfactory orientations and further the plurality of CNTs 11a, 11a, ... that configure the CNT aggregates 11 are aligned with regularity and are disposed with high density as described above, the heat from the CNT wire 10 is likely to be discharged while smoothly delivered along the longitudinal direction of the CNT aggregates 11. Therefore, since it is possible to adjust the heat dissipation route in the longitudinal direction and the radial sectional direction by adjusting the alignment structures and the density of the CNT aggregates 11 and the CNTs 11a, the CNT wire 10 exhibits more excellent heat dissipation ability as compared with the core wire made of metal.

The q value of the peak top at the (10) peak of the intensity based on the X-ray scattering indicating density of the plurality of CNTs 11a, 11a, ... is preferably equal to or greater than 2.0 nm⁻¹ and equal to or less than 5.0 nm⁻¹, and the full-width at half maximum Δq (FWHM) is preferably equal to or greater than 0.1 nm⁻¹ and equal to or less than 2.0 nm⁻¹ in order to further improve heat dissipation ability by obtaining high density.

The orientations of the CNT aggregates 11 and the CNTs 11a and the alignment structure and the density of the CNTs 11a can be adjusted by appropriately selecting a spinning method such as dry spinning, wet spinning, or liquid crystal spinning and spinning conditions for the spinning method, which will be described later.

Next, the insulating coating layer coating the peripheral surface of the CNT wire 10 will be described.

As a material of the insulating coating layer 21, a material that is used for an insulating coating layer of a coated electric wire using metal in a core wire can be used, and examples thereof include a thermoplastic resin and a thermosetting resin. Examples of the thermoplastic resin include polytetrafluoroethylene (PTFE) (Young's modulus: 0.4 GPa), polyethylene (Young's modulus: 0.1 to 1.0 GPa), polypropylene (Young's modulus: 1.1 to 1.4 GPa), polyacetal (Young's modulus: 2.8 GPa), polystyrene (Young's modulus: 2.8 to 3.5 GPa), polycarbonate (Young's modulus: 2.5 GPa), polyamide (Young's modulus: 1.1 to 2.9 GPa), polyvinyl chloride (Young's modulus: 2.5 to 4.2 GPa), polymethyl methacrylate (Young's modulus: 3.2 GPa), polyurethane (Young's modulus: 0.07 to 0.7 GPa), and the like. Examples of the thermosetting resin include polyimide (2.1 to 2.8 GPa), a phenol resin (5.2 to 7.0 GPa), and the like. One of these may be used alone, or two or more of these may appropriately be mixed and used. Although the Young's modulus of the material configuring the insulating coating layer 21 is not particularly limited, the Young's modulus is preferably equal to or greater than 0.07 GPa and equal to or less than 7 GPa and is particularly preferably equal to or greater than 0.07 GPa and equal to or less than 4 GPa, for example.

The insulating coating layer 21 may include one layer as illustrated in FIG. 1 or may include two or more layers instead. Also, a thermosetting resin layer may further be provided on the insulating coating layer 21 as needed. In addition, the aforementioned thermosetting resin may contain a filler that has a fiber form or a particle form.

In the coated CNT electric wire 1, the proportion of the sectional area of the insulating coating layer 21 in the radial direction with respect to the sectional area of the CNT wire 10 in the radial direction is preferably within a range of equal to or greater than 0.01 and equal to or less than 1.5. By the proportion of the sectional areas falling within the range of equal to or greater than 0.01 and equal to or less than 1.5, the CNT wire 10 has a lighter weight than a core wire made of copper, aluminum, or the like, it is possible to reduce the thickness of the insulating coating layer 21, and it is thus possible to sufficiently secure insulation reliability and to obtain excellent heat dissipation ability with respect to the heat of the CNT wire 10. Also, it is possible to realize weight reduction as compared with an electric wire coated with metal such as copper, aluminum, or the like even if a thick insulating coating layer is formed.

Although there is a case in which it is difficult to maintain the shape in the longitudinal direction only with the CNT wire 10 alone, the coated CNT electric wire 1 can maintain the shape in the longitudinal direction since the peripheral surface of the CNT wire 10 is coated with the insulating coating layer 21 at the aforementioned proportion of the sectional area. Therefore, it is possible to enhance handling ability when the coated CNT electric wire 1 is arranged.

Further, since minute unevenness is formed on the peripheral surface of the CNT wire 10, adhesiveness between the CNT wire 10 and the insulating coating layer 21 is improved, and it is possible to curb peeling-off between the CNT wire 10 and the insulating coating layer 21, as compared with a coated electric wire using a core wire made of aluminum or copper.

Although the proportion of the sectional areas is not particularly limited, the proportion is preferably equal to or greater than 0.01 and equal to or less than 1.5, and a lower limit value thereof is preferably 0.2 and is particularly preferably 0.5 in order to further improve insulation reliability. On the other hand, an upper limit value of the proportion of the sectional areas is preferably 1.0 and is particularly preferably 0.8 in order to further reduce the weight of the coated CNT electric wire 1 and to further improve heat dissipation ability with respect to the heat of the CNT wire 10.

In a case in which the proportion of the sectional areas falls within the range of equal to or greater than 0.01 and equal to or less than 1.5, although the sectional area of the CNT wire 10 in the radial direction is not particularly limited, the sectional area is preferably equal to or greater than 0.0005 mm² and equal to or less than 80 mm², is further preferably equal to or greater than 0.0018 mm² and equal to or less than 10 mm², and is particularly preferably equal to or greater than 0.0018 mm² and equal to or less than 6.0 mm². Also, although the sectional area of the insulating coating layer 21 in the radial direction is not particularly limited, the sectional area is preferably equal to or greater than 0.002 mm² and equal to or less than 40 mm² and is particularly preferably equal to or greater than 0.02 mm² and equal to or less than 2 mm², for example, in terms of a balance between insulation reliability and heat dissipation ability.

The sectional areas can be measured from a scanning electron microscope (SEM) observation image, for example. Specifically, an SEM image (100 times to 10,000 times) of a section of the coated CNT electric wire 1 in the radial direction is obtained, then an area obtained by subtracting an area of the material of the insulating coating layer 21 that has entered the inside of the CNT wire 10 from an area of a portion surrounded by the outer periphery of the CNT wire 10 and a total of an area of the portion of the insulating coating layer 21 coating the outer periphery of the CNT wire 10 and an area of the material of the insulating coating layer 21 that has entered the inside of the CNT wire 10 are defined as a sectional area of the CNT wire 10 in the radial direction and a sectional area of the insulating coating layer 21 in the radial direction, respectively. The sectional area of the insulating coating layer 21 in the radial direction includes a resin that has entered the interspace of the CNT wire 10.

The Young's modulus of the CNTs is higher than the Young's modulus of aluminum or copper used in a core wire in the related art. While the Young's modulus of aluminum is 70.3 GPa and the Young's modulus of copper is 129.8 GPa, the Young's modulus of the CNTs is 300 to 1500 GPa, which is a value of more than about double to about ten times. Thus, since it is possible to use a material with a high Young's modulus (for example, a thermoplastic resin with a high Young's modulus) as the material of the insulating coating layer 21 in the coated CNT electric wire 1 as compared with the coated electric wire using aluminum or copper in the core wire and thereby to provide excellent abrasion resistance to the insulating coating layer 21 of the coated CNT electric wire 1, and the coated CNT electric wire 1 exhibits excellent durability.

Since the Young's modulus of the CNTs is higher than the Young's modulus of aluminum or copper used in the core wire in the related art as described above, the proportion of the Young's modulus of the material configuring the insulating coating layer with respect to the Young's modulus of the core wire in the coated CNT electric wire 1 is smaller than the proportion of the Young's modulus of the coated electric wire using aluminum or copper in the core wire. Therefore, it is possible to curb peeling-off between the CNT wire 10 and the insulating coating layer 21 and cracking of the insulating coating layer 21 even if the coated CNT electric wire 1 is repeatedly bent, as compared with the coated electric wire using aluminum or copper in the core wire.

Although the proportion of the Young's modulus of the material configuring the insulating coating layer 2 with respect to the Young's modulus of the CNT wire 10 is not particularly limited, a lower limit value of the proportion of the Young's moduli is preferably 0.00001 in order to prevent the insulating coating layer 21 from peeling off from the CNT wire 10 due to the insulating coating layer 21 following the CNT wire 10 even if the coated CNT electric wire 1 is repeatedly bent, and is more preferably 0.0005 and is particularly preferably 0.001 in order to prevent the insulating coating layer 21 from peeling off from the CNT wire 10 even if the coated CNT electric wire 1 is bent over a long period of time. On the other hand, an upper limit value of the proportion of the Young's modulus is preferably 0.5 in order to prevent cracking from occurring in the insulating coating layer 21 even if the coated CNT electric wire 1 is repeatedly bent, and is more preferably 0.1, is further preferably 0.01, and is particularly preferably 0.005 in order to prevent cracking from occurring in the insulating coating layer 21 even if the coated CNT electric wire 1 is bent over a long period of time.

The Young's modulus of the CNT wire 10 and the Young's modulus of the material configuring the insulating coating layer 21 can be measured by, for example, causing the insulating coating layer of the coated CNT electric wire to peel and performing a tensile test using the peeling insulating coating layer as a sample by a method in accordance with JIS K7161-1.

The thickness of the insulating coating layer 21 in a direction that perpendicularly intersects the longitudinal direction (that is, the radial direction) is preferably uniformized in order to improve an insulation property and abrasion resistance of the coated CNT electric wire 1. Specifically, the thickness deviation rate of the insulating coating layer 21 is equal to or greater than 50% in order to improve an insulation property and abrasion resistance and is preferably equal to or greater than 80% in order to improve handling ability in addition to the insulation property and the abrasion resistance. Note that the "thickness deviation rate" in this specification means a value obtained by calculating α = (a minimum value of the thickness of the insulating coating layer 21/a maximum value of the thickness of the insulating coating layer 21) × 100 for each of sections in the radial direction at every 10 cm in arbitrary 1.0 m of the coated CNT electric wire 1 on the center side in the longitudinal direction and averaging the α values calculated at the sections. Also, the thickness of the insulating coating layer 21 can be measured from an image of SEM observation by circularly approximating the CNT wire 10, for example. Here, the center side in the longitudinal direction indicates a region located at the center when seen in the longitudinal direction of the wire.

The thickness deviation rate of the insulating coating layer 21 can be improved by adjusting a tensile force applied to the CNT wires 10 in the longitudinal direction when the CNT wire 10 is caused to pass through a die in an extrusion process in a case in which the insulating coating layer 21 is formed at the peripheral surface of the CNT wire 10 through extrusion coating, for example. In a case in which the insulating coating layer 21 is formed by the extrusion coating method, the tensile force to be applied to the CNT wire 10 is preferably set to be large such that the die and the CNT wire 10 maintain a successively coaxial or substantially coaxial state, for example.

Also, in a case in which the insulating coating layer 21 is formed on the peripheral surface of the CNT wire 10 by an application method, the thickness deviation rate of the insulating coating layer 21 can be improved by increasing circularity of the section of the wire in the radial direction for a solid wire or by increasing the number of twists for a twisted wire.

Although the number of twists in the case in which the CNT wire 10 is formed as a twisted wire is not particularly limited, the number of twists is preferably equal to or greater than 40 T/m and equal to or less than 1500 T/m. A lower limit value of the number of twists is more preferably 100 and is further preferably 200 in order to obtain sufficient strength of the wire. Also, an upper limit value of the number of twists is more preferably 1000 and is further preferably 800 in order to curb variations in the CNT wire 10 due to a stress caused by twisting-back. If the number of twists is less than 40 T/m, tensile strength of the CNT wire 10 is insufficient, it is not possible to apply a sufficient tensile force to the CNT wire 10 in the insulating coating processing, and variations in the CNT wire 10 passing through the die are likely to occur. Therefore, the thickness deviation rate of the insulating coating layer is likely to be low. On the other hand, if the number of twists exceeds 1500 T/m, the tensile strength of the CNT wire 10 is high, and it is thus possible to apply a sufficient tensile force to the CNT wire 10 in the insulating coating processing. However, if the number of twists exceeds 1500 T/m, the stress of twisting-back increases, and it is difficult to curb variations in the CNT wire 10 passing through the die even if a sufficient tensile force is applied to the CNT wire 10 in the insulating coating processing. Therefore, the thickness deviation rate of the insulating coating layer is likely to be low. If the number of twists is equal to or greater than 40 T/m and equal to or less than 1500 T/m, the thickness deviation rate of the insulating coating layer is high, and an excellent insulation property is achieved. Also, if the number of twists is equal to or greater than 200 T/m and equal to or less than 1000 T/m, the thickness deviation rate of the insulating coating layer is likely to be high, and a further excellent insulation property is achieved.

The number of twists of the CNT wire 10 is equal to or greater than 40 T/m and equal to or less than 1500 T/m and is preferably equal to or greater than 200 T/m and equal to or less than 1000 T/m, and is further, the full-width at half maximum Δθ in azimuth angle of the CNT wire is preferably equal to or less than 80°, and the thickness deviation rate of the insulating coating layer is preferably equal to or greater than 80%. If the number of twists of the CNT wire 10 is equal to or greater than 40 T/m an equal to or less than 1500 T/m, the CNTs are disposed with high density. Also, by the full-width at half maximum Δθ in azimuth angle being equal to or less than 80°, the CNT aggregates 11 have a high orientation in the CNT wire 10. In this manner, the heat of the CNT wire 10 is likely to be delivered along the longitudinal direction, and the CNT wire 10 exhibits excellent heat dissipation ability. Further, by the thickness deviation rate of the insulating coating layer being equal to or greater than 80%, insulation breakage is unlikely to occur, and an excellent insulation property is achieved.

### [Method for manufacturing coated carbon nanotube electric wire]

Next, an example of a method for manufacturing the coated CNT electric wire 1 according to the embodiment of the present invention will be described. The coated CNT electric wire 1 can be manufactured by manufacturing the CNTs 11a first, forming the CNT wire 10 from the plurality of obtained CNTs 11a, and coating the peripheral surface of the CNT wire 10 with the insulating coating layer 21.

The CNTs 11a can be produced by a method such as a floating catalyst method (Japanese Patent No. 5819888) or a substrate method (Japanese Patent No. 5590603). The strands of the CNT wire 10 can be produced by, for example, dry spinning (Japanese Patent No. 5819888, Japanese Patent No. 5990202, and Japanese Patent No. 5350635), wet spinning (Japanese Patent No. 5135620, Japanese Patent No. 5131571, and Japanese Patent No. 5288359), liquid crystal spinning (National Publication of International Patent Application No. 2014-530964), or the like.

At this time, the orientation of the CNT aggregates 11 configuring the CNT wire 10 or the orientation of the CNTs 11a configuring the CNT aggregates 11 can be adjusted by appropriately selecting a spinning method such as dry spinning, wet spinning, or liquid crystal spinning, for example, and spinning conditions for the spinning method.

In a case of a twisted wire, it is possible to obtain the twisted wire by bundling a plurality of solid wires and twisting ends on one side a plurality of number of times in a state in which ends on the other side are fixed. The number of twists can be represented by a value (unit: T/m) obtained by dividing the number of times (T) the wires are twisted by the length (m) of the wires.

As a method for coating the peripheral surface of the CNT wire 10 obtained as described above with the insulating coating layer 21, a method of coating a core wire made of aluminum or copper with the insulating coating layer can be used, and for example, it is possible to exemplify a method of melting a thermoplastic resin that is a raw material of the insulating coating layer 21 and extruding the thermoplastic resin to the circumference of the CNT wire 10 to coat the CNT wire 10 with the thermoplastic resin or a method of applying a molten thermoplastic resin to the circumference of the CNT wire 10.

The coated CNT electric wire 1 according to the embodiment of the present invention can be used as a general electric wire such as a wire harness, or a cable may be produced from the general electric wire using the coated CNT electric wire 1. Also, a coil may be produced by winding the coated CNT electric wire 1. In this case, space factor is preferably equal to or greater than 60%. The coil can be used for various motors and the like and is particularly preferably used for a precision device, a medical device, a portable device, or the like in terms of heat dissipation ability and light weight.

### Examples

Although examples of the present invention will be described below, the present invention is not limited to the following examples unless modifications otherwise depart from the gist of the present invention.

### (Concerning Examples 1 to 20 and Comparative Examples 1 to 5)

### Concerning method for manufacturing CNT wire

First, strands (solidwires) of CNT wires with equivalent circle diameters of 0.2 mm were obtained by a dry spinning method (Japanese Patent No. 5819888) of directly spinning CNTs produced by the floating catalyst method or a method of wet-spinning the CNTs (Japanese Patent No. 5135620, Japanese Patent No. 5131571, and Japanese Patent No. 5288359). Also, CNT wires with equivalent circle diameters of greater than 0.2 mm were obtained by adjusting the number of CNT wires with an equivalent circle diameter of 0.2 mm and appropriately twisting the CNT wires together, thereby obtaining twisted wires.

### Concerning method for coating peripheral surface of CNT wire with insulating coating layer

Insulating coating layers were formed by extruding any of the following resins to the circumferences of conductive elements and coating the circumferences with the resins using an ordinary extruding and molding machine for manufacturing an electric wire, thereby producing coated CNT electric wires used in examples and comparative examples in Table 1 shown below. Also, thickness deviation rates were adjusted by changing a tensile force to be applied to the CNT wires.
- Polyurethane (manufactured by Totoku Toryo Co., Ltd., TPU3000EA)
- Polyimide (manufactured by Unitika Ltd., U imide)
- Polypropylene (manufactured by Japan Polypropylene Corporation, Novatec PP)

### (a) Measurement of sectional area of CNT wire

A section of each CNT wire in the radial direction was cut using an ion milling device (IM4000 manufactured by Hitachi High-Tech Corporation), and the sectional area of each CNT wire in the radial direction was then measured from an SEM image obtained by a scanning electron microscope (SU8020 manufactured by Hitachi High-Tech Corporation, magnification: 100 times to 10,000 times). Similar measurement was repeated at every 10 cm from arbitrary 1.0 m of the coated CNT electric wire on the center side in the longitudinal direction, and an average value thereof was defined as a sectional area of the CNT wire in the radial direction. Note that the resin that entered the inside of the CNT wire was not included in the sectional area of the CNT wire.

### (b) Measurement of sectional area of insulating coating layer

A section of each CNT wire in the radial direction was cut using an ion milling device (IM4000 manufactured by Hitachi High-Tech Corporation), and the sectional area of the insulating coating layer in the radial direction was then measured from an SEM image obtained by a scanning electron microscope (SU8020 manufactured by Hitachi High-Tech Corporation, magnification: 100 times to 10,000 times). Similar measurement was repeated at every 10 cm from arbitrary 1.0 m of the coated CNT electric wire on the center side in the longitudinal direction, and an average value thereof was defined as a sectional area of the insulating coating layer in the radial direction. Therefore, the resin that entered the inside of the CNT wire was included as a sectional area of the insulating coating layer in the measurement.

### (c) Number of twists of CNT wire

In Examples 2 to 10, 12 to 15, and 17 to 20 and Comparative Examples 1 to 3, the CNT wires were obtained as twisted wires by bundling a plurality of strands and twisting ends on one side a predetermined number of times in a state in which ends on the other side were fixed. Each number of twists was represented by a value obtained by dividing the number of times (T) the wires were twisted by the length (m) of the wires.

### (d) Measurement of full-width at half maximum Δθ in azimuth angle based on SAXS

Small-angle X-ray scattering measurement was performed using a small-angle X-ray scattering device (Aichi Synchrotron), and full-widths at half maximum Δθ in azimuth angle were obtained from the obtained azimuth plots.

### (e) Measurement of q value of peak top and full-width at half maximum Δq in azimuth angle based on WAXS

Wide-angle X-ray scattering measurement was performed using a wide-angle X-ray scattering device (Aichi Synchrotron), and q values of the peak tops at (10) peaks of intensity and full-widths at half maximum Δq were obtained from obtained q-value-intensity graphs.

### (f) Young's modulus of material configuring insulating coating layer/Young's modulus of CNT wire

The insulating coating layer was made to peel from each 1.0 m coated CNT electric wire. Five 5 cm test pieces were collected at every 20 cm in the longitudinal direction from each of the peeled insulating coating layer and the CNT wire. A tensile test was conducted by a method in accordance with JIS K 7161-1, and the Young's modulus of each test piece was obtained. A proportion of the Young's modulus of the material configuring the insulating coating layer with respect to the Young's modulus of the CNT wire was calculated on the basis of a value obtained by averaging the Young's moduli of the five test pieces of each insulating coating layer and a value obtained by averaging the Young's moduli of the five test pieces of each CNT wire.

### (g) Measurement of Thickness deviation rate

Each 1.0 m coated CNT electric wire was cut at every 10 cm in the longitudinal direction, and thicknesses of the insulating coating layer at the sections in the radial direction were measured. In each of the sections, a value of α = (a minimum value of the thickness of the insulating coating layer/a maximum value of the thickness of the insulating coating layer) × 100 was calculated. A value obtained by averaging the α values calculated in the sections was defined as each thickness deviation rate. Also, the thickness of the insulating coating layer was able to be measured from an SEM image as a shortest distance from an interference of a circularly approximated CNT wire 10 and the insulating coating layer 21, for example.

Results of the aforementioned measurement for the coated CNT electric wires are shown in Table 1 below. Note that in Table 1, the proportion of the sectional area of the insulating coating layer in the radial direction with respect to the sectional area of the CNT wire in the radial direction is simply described as a "proportion of sectional areas", and the proportion of the Young's modulus of the material configuring the insulating coating layer with respect to the Young's modulus of the CNT wire is simply described as a "proportion of Young's moduli".

The coated CNT electric wires produced as described above were evaluated as follows.

### (1) Heat dissipation ability

Four terminals were connected to both ends of a 100 cm coated CNT electric wire, and resistance was measured by a four-terminal method. At this time, an applied current was set to 2000 A/cm², and a temporal change in resistance value was recorded. Resistance values at the time of starting the measurement and after elapse of 10 minutes were compared, and an increase rate was calculated. Since the resistance of the coated CNT electric wire increases in proportion to a temperature, it is possible to determine that the coated CNT electric wire with a smaller rate of increase in resistance has more excellent heat dissipation ability. A rate of increase in resistance of less than 5% was evaluated as being satisfactory "O", a rate of increase in resistance of equal to or greater than 5% and less than 10% was evaluated as being substantially satisfactory "Δ", and a rate of increase in resistance of equal to or greater than 10% was evaluated as being inferior "×".

However, since different conductive elements have different coefficients of correlation between a temperature and an increase in resistance, it is not possible to compare the coated CNT electric wire and a metal electric wire using this evaluation method. Therefore, heat dissipation ability was not evaluated for the A1 electric wire and the Cu electric wire.

### (2) Durability in bending

By a method in accordance with IEC60227-2, a 100 cm coated CNT electric wire was bent at 90 degrees 1000 times in a state in which a load of 500 gf was applied thereto. Thereafter, section observation was performed at every 10 cm of the coated CNT electric wire in the longitudinal direction, and whether or not there was peeling between the coated CNT electric wire and the insulating coating layer was checked. A coated CNT electric wire with no peeling was evaluated as being satisfactory "O", a coated CNT electric wire that partially peeled in an allowable level of product quality was evaluated as being substantially satisfactory "Δ", and a coated CNT electric wire with the CNT wire disconnected was evaluated as being inferior "×".

### (3) Abrasion resistance

A test for evaluating abrasion resistance was conducted by a method in accordance with JIS C 3216-3, Article 6. A test result that satisfied the grade 2 described in Table 1 in JIS C 3215-4 was evaluated as being satisfactory "O", a test result that satisfied the grade 1 was evaluated as being satisfactory "Δ", a test result that did not satisfy any grade was evaluated as being inferior "×", and test results evaluated as "Δ" or higher were evaluated as indicating excellent abrasion resistance.

### (4) Insulation reliability

An insulation breakage test for evaluating insulation reliability was conducted by a method in accordance with JIS C 3216-5, Article 4. A test result that satisfied the grade 3 described in Table 9 in JIS C 3215-0-1 was evaluated as being significantly satisfactory "⊙", a test result that satisfied the grade 2 was evaluated as being satisfactory "○", a test result that satisfied the grade 1 was evaluated as being substantially satisfactory "Δ", and a test result that did not satisfy any grades was evaluated as being inferior "×".

### (5) Handling ability

A five-layer coil with a width of 10 mm was obtained by manually winding the coated CNT electric wire around a core with a diameter of 10 mm at a constant speed. Through section observation of the obtained coil, space factor (space factor (%) = (a sum of sectional areas of the coated CNT electric wire)/(coil sectional area) × 100) was obtained. Coils were produced five times for each coated CNT electric wire, and an average value of the coils produced five times was defined as the space factor. Space facto of equal to or greater than 70% was evaluated as indicating significantly satisfactory handling ability "⊙", space factor of equal to or greater than 50% and less than 70% was evaluated as indicating satisfactory handling ability "○", and space factor of less than 50% was evaluated as indicating not satisfactory handling ability "×".

Results of the aforementioned evaluation are shown in Table 1 below.

**[Table 1]**

| | Resin type of insulating coating layer | Sectiona l area of CNT wire (mm²) | Sectiona l area of insulatin g coating layer (mm²) | Form of CNT wire | Numbe r of twists (T/m) | Proport ion of section al areas | Proportion of Young's moduli | Azimut h angle (°) | Thickn ess deviati on rate (%) | Abrasi on resista nee | Durabil ity in bendin g | Heat dissipa tion ability | Insulati on reliabili ty | Handling property |
|---|---|---|---|---|---|---|---|---|---|---|---|---|---|---|
| Example 1 | Polyurethane | 0,002 | 0,0029 | Single-stranded wire | - | 1,47 | 0,00046 | 40 | 51 | Δ | ○ | ⊙ | Δ | Not evaluated |
| Example 2 | Polyurethane | 0,0629 | 0,0391 | Twisted wire of 24 single-stranded wires | 40 | 0,62 | 0,00068 | 40 | 51 | Δ | ○ | ⊙ | Δ | ○ |
| Example 3 | Polyurethane | 0,0629 | 0,0391 | Twisted wire of 24 single-stranded wires | 100 | 0,62 | 0,00068 | 40 | 70 | ○ | ○ | ⊙ | ○ | ○ |
| Example 4 | Polyurethane | 0,0630 | 0,0381 | Twisted wire of 24 single-stranded wires | 200 | 0,60 | 0,00062 | 40 | 81 | ⊙ | ○ | ⊙ | ⊙ | ⊙ |
| Example 5 | Polyurethane | 0,0630 | 0,0381 | Twisted wire of 24 single-stranded wires | 600 | 0,60 | 0,00062 | 40 | 88 | ⊙ | ○ | ⊙ | ⊙ | ⊙ |
| Example 6 | Polyurethane | 0,0630 | 0,0381 | Twisted wire of 24 single-stranded wires | 600 | 0,60 | 0,00062 | 55 | 73 | ○ | ○ | ○ | ○ | ⊙ |
| Example 7 | Polyurethane | 0,0630 | 0,0381 | Twisted wire of 24 single-stranded wires | 600 | 0,60 | 0,00062 | 75 | 53 | Δ | ○ | Δ | Δ | ⊙ |
| Example 8 | Polyurethane | 0,0630 | 0,0381 | Twisted wire of 24 single-stranded wires | 1200 | 0,60 | 0,00062 | 40 | 53 | Δ | ○ | ⊙ | Δ | ⊙ |
| Example 9 | Polyurethane | 0,253 | 0,172 | Twisted wire of 96 single-stranded wires | 200 | 0,68 | 0,00084 | 40 | 83 | ⊙ | Δ | ⊙ | ⊙ | Not evaluated |
| Example 10 | Polyurethane | 0,249 | 0,169 | Twisted wire of 96 single-stranded wires | 200 | 0,68 | 0,00089 | 40 | 89 | ⊙ | ○ | ⊙ | ⊙ | Not evaluated |
| Example 11 | Polyimide | 0,00226 | 0,0032 | Single-stranded wire | - | 1,43 | 0,0024 | 40 | 58 | Δ | ○ | ⊙ | Δ | Not evaluated |
| Example 12 | Polyimide | 0,0632 | 0,088 | Twisted wire of 24 single-strandedwires | 50 | 1,39 | 0,0028 | 40 | 69 | ○ | ○ | ⊙ | Δ | ○ |
| Example 13 | Polyimide | 0,0611 | 0,076 | Twisted wire of 24 single-stranded wires | 100 | 1,25 | 0,0027 | 40 | 64 | ○ | ○ | ⊙ | ○ | ○ |
| Example 14 | Polyimide | 0,254 | 0,312 | Twisted wire of 96 single-stranded wires | 100 | 1,23 | 0,0030 | 40 | 78 | ○ | Δ | ⊙ | ○ | Not evaluated |
| Example 15 | Polyimide | 0,2489 | 0,367 | Twisted wire of 96 single-stranded wires | 200 | 1,47 | 0,0031 | 40 | 74 | ○ | ○ | ⊙ | ○ | Not evaluated |
| Example 16 | Polypropylene | 0,00239 | 0,0032 | Single-stranded wire | - | 1,35 | 0,0016 | 40 | 55 | Δ | ○ | ⊙ | Δ | Not evaluated |
| Example 17 | Polypropylene | 0,0617 | 0,084 | Twisted wire of 24 single-stranded wires | 100 | 1,36 | 0,0016 | 40 | 82 | ⊙ | ○ | ⊙ | ⊙ | ⊙ |
| Example 18 | Polypropylene | 0,0634 | 0,092 | Twisted wire of 24 single-stranded wires | 200 | 1,45 | 0,0016 | 40 | 74 | ○ | ○ | ⊙ | ○ | ○ |
| Example 19 | Polypropylene | 4,51 | 1,97 | Twisted wire of 6144 single-stranded wires | 50 | 0,44 | 0,0017 | 40 | 87 | ⊙ | ○ | ⊙ | ⊙ | Not evaluated |
| Example 20 | Polypropylene | 4,42 | 1,83 | Twisted wire of 6144 single-stranded wires | 100 | 0,41 | 0,0017 | 40 | 89 | ⊙ | ○ | ⊙ | ⊙ | Not evaluate d |
| Comparative Example 1 | Polyurethane | 0,265 | 0,0038 | Twisted wire of 96 single-stranded wires | 100 | 0,015 | 0,00054 | 40 | *42* | × | ○ | ⊙ | × | Not evaluated |
| Comparative Example 2 | Polyimide | 0,0621 | 0,231 | Twisted wire of 24 single-stranded wires | 50 | 3,72 | 0,0025 | 40 | *38* | ○ | Δ | ⊙ | ○ | × |
| Comparative Example 3 | Polypropylene | 4,47 | 0,079 | Twisted wire of 6144 single-stranded wires | 50 | 0,018 | 0,00177 | 40 | *41* | × | ○ | ⊙ | × | Not evaluated |
| Comparative Example 4 (core wire: Al) | Polyurethane | 0,0314 | 0,0393 | Single-stranded wire | - | 1,25 | 0,033 | 40 | 80 | ○ | × | - | ○ | Not evaluated |
| Comparative Example 5 (core wire: Cu) | Polyurethane | 0,0314 | 0,0393 | Single-stranded wire | - | 1,25 | 0,018 | 40 | 78 | ○ | × | - | ○ | Not evaluated |

| | | | | | | | | | | | | | | |
|---|---|---|---|---|---|---|---|---|---|---|---|---|---|---|
| Note) Underlines and italics in the table indicate that the values are outside the scope of the present invention. | | | | | | | | | | | | | | |

As shown in Table 1 above, in Examples 1 to 20, the thickness deviation rates of the insulating coating layers in the coated CNT electric wires were equal to or greater than 50%, and all heat dissipation abilities, durability in bending, abrasion resistance, and insulation reliability were satisfactory. In Examples 3, 6, 12 to 15, and 18, in particular, the thickness deviation rates of the insulating coating layers in the coated CNT electric wires were equal to or greater than 60% and equal to or less than 79%, and abrasion resistance and insulation reliability were more satisfactory. In the coated CNT electric wires in which the thickness deviation rates of the insulating coating layers were equal to or greater than 80% (Examples 4, 5, 9, 10, 17, 19, and 20), in particular, excellent abrasion resistance and insulation reliability were achieved. Also, it was possible to stably wind the coated CNT electric wires when the coated CNT electric wires were worked into a coil form. Due to satisfactory handling ability, coils with high space factorwere obtained.

Further, in Examples 1 to 20, all the full widths at half maximum Δθ in azimuth angle were equal to or greater than 40° and equal to or less than 75°. Therefore, the CNT aggregates in the coated CNT electric wires in Examples 1 to 20 had excellent orientations. In Example 6, in particular, excellent heat dissipation ability was achieved since the full width at half maximum Δθ in azimuth angle was as small as 55°. Also, in Examples 1 to 5 and 8 to 20, heat dissipation ability was more satisfactory since the full-widths at half maximum Δθ in azimuth angle was 40°, which was yet smaller. Further, in Examples 1 to 20, all the q values of peak tops at (10) peaks of intensity were equal to or greater than 2.0 nm⁻¹ and equal to or less than 5.0 nm⁻¹, and all the full-widths at half maximum Δq were equal to or greater than 0.1 nm⁻¹ and equal to or less than 2.0 nm⁻¹. Therefore, the CNTs were present with high density in the coated CNT electric wires in Examples 1 to 20.

On the other hand, in Comparative Example 1, the thickness deviation rate of the insulating coating layer was 42%, and both abrasion resistance and insulation reliability were inferior. In Comparative Example 2, the thickness deviation rate of the insulating coating layer was 38%, and winding was not stably performed at the time of working into a coil form. Due to poor handling ability, space factor of the coil decreased. In Comparative Example 3, the thickness deviation rate of the insulating coating layer was 41%, and both abrasion resistance and insulation reliability were inferior. Also, in Comparative Examples 4 and 5, conductive elements were copper wires or aluminum wires, and durability in bending was inferior.

### List of Reference Signs

1 coated carbon nanotube electric wire,
10 carbon nanotube wire,
11 carbon nanotube aggregate,
11a carbon nanotube,
21 insulating coating layer

## Claims

1. A coated carbon nanotube electric wire comprising:
a carbon nanotube wire including a single or a plurality of carbon nanotube aggregates configured of a plurality of carbon nanotubes; and
an insulating coating layer coating the carbon nanotube wire,
wherein a thickness deviation rate of the insulating coating layer is equal to or greater than 50%.

2. The coated carbon nanotube electric wire according to claim 1,
wherein the thickness deviation rate of the insulating coating layer is equal to or greater than 80%.

3. The coated carbon nanotube electric wire according to claim 1 or 2,
wherein a number of twists of the carbon nanotube wire is equal to or greater than 40 T/m and equal to or less than 1500 T/m.

4. The coated carbon nanotube electric wire according to claim 3,
wherein the number of twists of the carbon nanotube wire is equal to or greater than 200 T/m and equal to or less than 1000 T/m.

5. The coated carbon nanotube electric wire according to claim 3 or 4,
wherein the carbon nanotube wire includes a plurality of the carbon nanotube aggregates, and a full-width at half maximum Δθ in azimuth angle in azimuth plot based on small-angle X-ray scattering indicating an orientation of the plurality of carbon nanotube aggregates is equal to or less than 80°, and
a thickness deviation rate of the insulating coating layer is equal to or greater than 80%.

6. The coated carbon nanotube electric wire according to claim 5,
wherein the full-width at half maximum Δθ in azimuth angle is equal to or less than 60°.

7. The coated carbon nanotube electric wire according to any one of claims 1 to 6,
wherein a proportion of a sectional area of the insulating coating layer in a radial direction with respect to a sectional area of the carbon nanotube wire in the radial direction is equal to or greater than 0.01 and equal to or less than 1.5.

8. The coated carbon nanotube electric wire according to any one of claims 1 to 7,
wherein the sectional area of the carbon nanotube wire in the radial direction is equal to or greater than 0.0005 mm² and equal to or less than 80 mm².

9. The coated carbon nanotube electric wire according to any one of claims 1 to 8,
wherein a proportion of a Young's modulus of a material configuring the insulating coating layer with respect to a Young's modulus of the carbon nanotube wire is equal to or greater than 0.00001 and equal to or less than 0.5.

10. The coated carbon nanotube electric wire according to claim 9,
wherein the proportion of the Young's modulus of the material configuring the insulating coating layer with respect to the Young's modulus of the carbon nanotube wire is equal to or greater than 0.0005 and equal to or less than 0.1.

11. The coated carbon nanotube electric wire according to any one of claims 1 to 10,
wherein the carbon nanotube wire includes a plurality of the carbon nanotube aggregates, and a full-width at half maximum Δθ in azimuth angle in azimuth plot based on small-angle X-ray scattering indicating an orientation of the plurality of carbon nanotube aggregates is equal to or greater than 40°.

12. The coated carbon nanotube electric wire according to any one of claims 1 to 11,
wherein a q value of a peak top at a (10) peak of scattering intensity based on X-ray scattering indicating density of the plurality of carbon nanotubes is equal to or greater than 2.0 nm⁻¹ and equal to or less than 5.0 nm⁻¹, and a full-width at half maximum Δq is equal to or greater than 0.1 nm⁻¹ and equal to or less than 2.0 nm⁻¹.

13. A coil which is formed by winding the coated carbon nanotube electric wire according to any one of claims 1 to 12.
